# EUROPEAN PATENT SPECIFICATION

(11) **EP 3 715 911 B1**
(45) Date of publication and mention of the grant of the patent: **15.05.2024**
(21) Application number: 19165584.4
(22) Date of filing: 27.03.2019
(51) Int. Cl.: G01S 13/86, G01S 7/481

(54) **SENSOR ARRANGEMENT**
SENSORANORDNUNG
AGENCEMENT DE CAPTEUR

(43) Date of publication of application: 30.09.2020
(73) Proprietor: Baumer Electric AG, 8500 Frauenfeld (CH)
(72) Inventor: Weigel, Michael, 8555 Müllheim (CH); Wehrle, Wolfgang, 78467 Konstanz (DE)
(74) Representative: Strauss, Steffen

(56) References cited:
- EP-A1- 3 032 277
- EP-A1- 3 168 637
- US-A1- 2010 175 573
- US-A1- 2016 170 024

## Description

The invention relates to a sensor arrangement.

Radar sensors, in particular a frequency-modulated continuous-wave radar, short: FM-CW radar, or a direct time of flight sensor, or a phased array radar, or a MIMO radar, may be combined with different other sensors to get a combined measurement or to verify the measurements of the used sensors against each other. A sensor type that may be combined with a radar sensor is an optical sensor, in particular a sensor for light detection and ranging, short: lidar, or a camera.

A radar sensor and a lidar sensor have different characteristics. An angular resolution may be limited by diffraction with radar sensors, i.e. for several degree at 122GHz, and is typically >+/-4°, wherein lidar sensors show an angular resolution of about <0.02°.

Depth resolution may be quite high with radar sensors due to a large bandwidth (depth resolution of <75mm possible) and may be limited with lidar sensors due to realistic bandwidth in a range around 100MHz (depth resolution of several meters).

Both sensor types may use different technologies, i.e. short range (<50m) and typically, but not limited to, FMCW radar sensor or typically direct time of flight measurements for lidar sensors.

Ambient conditions may also vary. For example, radar sensors may be insensitive to fog and dust but sensitive to large rain drops, wherein lidar sensors may be sensitive to fog and dust but relatively insensitive to large rain drops.

Time of flight cameras may be severely limited in bandwidth (<1 MHz), total opening angle (<30°...40°) or ambient light sensitivity. Mechanical scanning may provide a large opening angle (>>90°).

A sensor fusion between different technologies such as radar sensors, lidar sensors, and cameras may provide information from radar sensors / scanners, lidar scanners and cameras.

Sensor fusion between cameras, radar, lidar sensors and/or scanners needs mathematical transformation operations to overlay the data from the sensors. This is because the devices need to be mounted in disparate locations. This introduces parallax errors and requires complex calibration of every installation.

US 2010 175 573 A1 discloses a sensor arrangement with a lidar module and a radar module used in conjunction to detect the presence of an explosively formed penetrator, wherein the lidar module and the radar module uses a common scanning or steering mechanism.

EP 303 227 7 A1 discloses a laser tracker with a first and second distance sensors with fiber optics. The second distance sensor may be a laser radar. A beam splitter for beam splitting according to the different wave lengths of two light sources is further herein disclosed.

It is an object of the invention to provide an improved concept for a combination of sensors.

The mechanical parts for the scanning mechanism drive the cost of lidar sensors in particular. Radar scanners that employ phased arrays require expensive signal processing and are limited in directional range and specificity.

One idea of the invention is to overcome disadvantages of having separate radar and other sensor modules like lidar scanners, cameras, and other, by providing a coaxial system comprising a radar module and a sensor module, wherein the radar module comprises a radar sensor, including phased array radar and MIMO (multiple input multiple output) radar, and the sensor module may comprise lidar sensing technology, including time of flight cameras, a camera, spectroscopy or an ultrasonic sensor. In particular for agriculture applications, it may be advantageous to combine the distance measurement of a radar sensor, or spatially resolved distance measurement of a phased array radar or MIMO radar (insensitive to ambient conditions such as dust and fog, yet low angular resolution) with the better angular resolution of optical systems such as lidar time of flight distance sensors, lidar time of flight cameras, cameras or even spectroscopy to gain additional information on moisture, nutrition status or vegetation index (e.g. NDVI).

The object is solved by a sensor arrangement comprising a radar module configured to transmit a first signal, wherein the first signal is a radar signal, and to receive a reflection of the first signal; a sensor module configured to transmit and/or receive a second signal different to a radar signal; and a deflector that is transparent for radar signals and deflective for the second signal, wherein the deflector is arranged in a beam path of the first signal in a predetermined angle; and configured to deflect a beam path of the second signal into the beam path of the first signal.

The beam path of the first signal may be a first beam path, the beam path of the second signal may be a second beam path and the beam path that is common for both signals after second signal is deflected into the beam path of the first signal may be a common beam path.

The radar module may be a FMCW radar module with 122GHz or 77GHz frequency range, that may be used to measure the distance to an object or several objects at the same time in the field of view of the radar sensor, e.g. +/-4° opening angle. Another embodiment of the radar module may be a phased array radar or MIMO radar setup. Applications may be measuring the distance to the ground and/or plants from a vehicle or an implement, controlling the distance of an implement to the ground, or measuring the distance to vehicles and/or objects around an vehicle or implement, but also measuring the distance to vehicles and/or objects and/or persons in road traffic.

It may be advantageous to simultaneously measure the distance (point distance values or spatially resolved distance values) or other properties with a different wavelength, or a multitude of wavelengths, e.g. in the visible or near infrared region of the electromagnetic spectrum, along the same axis, to achieve a coaxial setup to reduce the complexity of sensor fusion and costs associated with separated devices that each have multiple elements such as housings, power supply, etc..

The deflector may be a mirror and is arranged in the beam path of the first signal of the radar module.

The deflector coating may be chosen to be from a material that has high transmittance and low reflectance at radar wavelengths, but high reflectance at visible and near infrared wavelengths. A dielectric coating or a semiconductor coating is used to efficiently reflect optical wavelengths.

Furthermore, the deflector may be chosen with materials that have wavelength selective properties: high transmittance at radar wavelengths of e.g. 2.5mm or 4mm and high reflectance in the visible and/or near infrared range. In particular a diffractive structure for the optical wavelengths may be applied to the substrate of the deflector to realize the reflective properties.

In an embodiment, the sensor module is configured to transmit the second signal via the deflector and to receive a reflection of the second signal via the deflector.

In an embodiment, the sensor module is configured to transmit the second signal via the deflector and to receive a reflection of the second signal via a receiver module.

The receiver module may be configured to receive a reflection of the second signal. This allows for larger apertures of both sender and receiver lens.

In an embodiment, the sensor module comprises an optical sensor or an ultrasonic sensor.

Also, a camera may be used as sensor module, with for example monochromatic imaging array, an RGB imaging array or an imaging array with a number of chosen optical filters positioned over the pixels of the camera sensor to form a hyperspectral camera, to e.g. determine the normalized difference vegetation index (NDVI) from the red / NIR band, moisture, diseases, etc..

Furthermore, an optical spectroscopy device may be used as sensor module. It can be either with illumination (active) or without illumination (passive). Either way the device may be designed to implement some discrete bands (either detector for a passive system or illumination and detector for an active system) for certain tasks, e.g. determine moisture content, nitrogen content, NDVI, or continuously sense over a usable wavelength range (e.g. VIS - NIR).

Furthermore, an ultrasonic sensor may be used instead of an optical sensor as sensor module. In that case the deflector coating may be omitted. The deflector may in this case be of a solid material that deflects sound waves but is configured to be transmitted by radar waves.

In an embodiment, the optical sensor comprises a time of flight sensor, time of flight camera or a camera or a hyperspectral camera or a spectroscopy module.

The sensor module may comprise a laser time of flight sensor or a time of flight camera that is used to independently measure the distance to an object along the radar axis.

In an embodiment, the sensor module is arranged to transmit the second signal in an angle of 90° to the beam path of the first signal and wherein the deflector is arranged in the beam path of the first signal in an angle of 45°.

This allows an arrangement of the modules in right angles, which may be beneficial in production.

The deflector comprises a semiconductor coating or a dielectric coating.

In an embodiment, the deflector comprises a substrate comprising glass or plastic.

Both the deflector substrate, e.g. glass or plastic, and the deflector coating, e.g. dielectric mirror or metal coating, are chosen, so that the radar signals, in particular radar waves with a wavelength between e.g. 2.5 and 4mm, are transmitted efficiently through the deflector with only a slight lateral displacement depending on the refractive index of the substrate and angle of incidence.

In an embodiment, a thickness corrected for the deflector is optimized for the wavelength of the first signal, in particular multiples of a 1/4 of the wavelength of the first signal within the deflector substrate. This correction needs to take into account the refractive index of the deflector substrate and the angle of incidence.

In an embodiment, a thickness of the deflector is dependent of radar signals, in particular has a thickness of 1.82 mm or 2.91mm for an exemplary choice of a deflector substrate, 45° angle of incidence and 122GHz and 77Ghz radar waves respectively.

The thickness of the substrate of the deflector may be chosen to have an effective thickness of a fourth of the wavelength of the radar signals thickness, in particular taking into account the path and index of refraction. Additionally or alternatively, a substrate material of the deflector may be chosen that has minimal extinction at these wavelengths.

In an embodiment, the sensor arrangement comprises a scanner module that is arranged in a common beam path comprising the first beam path and the second beam path and that is rotatable around the common axis of the common beam path, comprising a reflector configured to reflect the common beam path.

The radar module may be axially aligned with the scanner module, the scanner module comprising a rotor with a reflector, i.e. a mirror, angled 45° with respect to the beam path of the first signal, and held by one or more bearings. The reflector may comprise a metal coating, in particular a thick metal coating, to reflect the first signal and the second signal. The scan range of the scanner module is in excess of 360° exhibiting a continuous rotation, but may be effectively limited to 270° due to mechanical constraints of free beam path.

The sensor arrangement comprising the scanner module, the radar module and the sensor module allows to scan an effective range in excess of 270°, but may be limited to 270° for practical purposes of environmental perception. The optical time of flight sensor of the sensor module may have a multitude of channels (transmitters, receivers) to allow for several scan plans to be realized. For the camera, including a time of flight camera, the image may be corrected for the scan angle (the image may be rotated depending on scan direction). Depending on the setup a geometrical correction for the scan angle may be needed for an optical time of flight sensor with a multitude of channels.

In an embodiment, the sensor arrangement comprises a motor mechanically coupled with the scanner module and configured to rotate the scanner module.

The reflector may be driven by a motor, in particular an electric motor. The motor rotor can be configured to hold the reflector. The transmitter channel of the radar module may be aligned with the rotation axis of the rotor.

In an embodiment the scanner module gives an angle feedback of the rotation angle to the evaluation electronics and/or the radar module, and/or the sensor module.

In an embodiment, a rotor of the motor and a substrate of the reflector of the scanner module are mechanically combined. This may increase mechanical robustness.

In an embodiment, the scanner module is balanced.

It may be advantageous to balance the whole scanner module to avoid excessive load on the bearings and detrimental vibrations in the setup.

In an embodiment, the sensor arrangement comprises a receiving module electrically coupled with the sensor module and configured to receive a reflected signal of the transmitted second signal, wherein the receiving reflector is arranged with a predetermined distance to the common beam path, and is mechanically coupled with the reflector on the transmitting side of the assembly.

The sensor arrangement may comprise an axial offset of the sensor module, in particular an optical time of flight sensor, wherein the transmitter channel and the receiver channel are separated. The axial offset may comprise a distance between the transmitting beam path of the second signal and the receiving beam path of the second signal. This allows for larger apertures of both sender and receiver lens, but also reduces the susceptibility to backscatter of light waves in the visible and NIR range due to Rayleigh scattering and/or Mie scattering caused by dust, fog, and other small particles in the air.

Embodiments of the invention are depicted in the figures and are described in detail in the following.
- Fig. 1: shows a schematic illustration of a sensor arrangement according to an embodiment;
- Fig. 2a: shows a schematic illustration of a sensor arrangement according to another embodiment;
- Fig. 2b: shows a schematic illustration of a sensor arrangement according to another embodiment;
- Fig. 3: shows a schematic illustration of a sensor arrangement according to another embodiment;
- Fig. 4: shows a schematic illustration of a sensor arrangement according to another embodiment;
- Fig. 5: shows a schematic illustration of a sensor arrangement according to another embodiment; and
- Fig. 6: shows a schematic illustration of a sensor arrangement according to another embodiment.

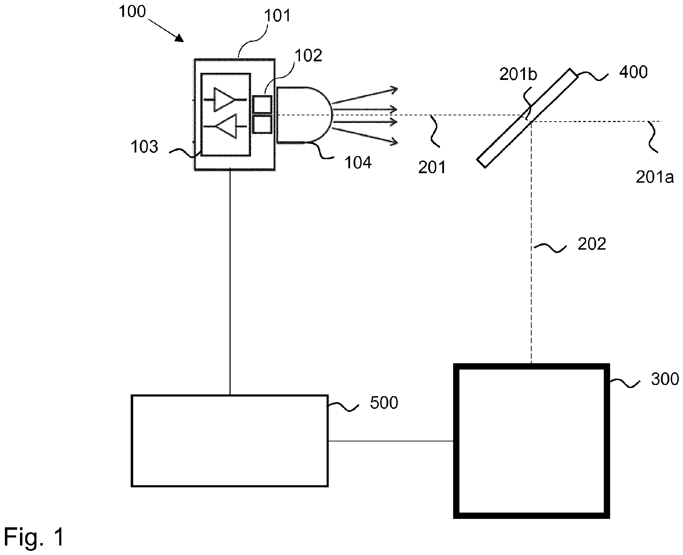

Fig. 1 shows a sensor arrangement 100 according to an embodiment. The sensor arrangement 100 comprises a radar module 101. The radar module 101 comprises a transceiver 102 and a signal processing electronics 103. The radar module 101 further comprises a dielectric lens 104. In another embodiment, the radar module 101 is configured in another way. In the described embodiment, the radar module 101 is an FMCW radar module, e.g. adapted to send out radar waves at 122 GHz. In an alternative embodiment a phased array radar module or MIMO radar module is used as radar module 101 to achieve a spatially resolved distance measurement. For this alternative embodiment the dielectric lens 104 may be omitted if advantageous.

The radar module 101 is adapted to transmit a first signal along a first beam path 201. The first signal is a radar wave. The first beam path 201 may be directed towards an object that is measured by the radar module. A reflection of the transmitted first signal is also received via the first beam path 201.

The sensor arrangement 100 further comprises a sensor module 300. The sensor module 300 is configured to transmit a second signal. The second signal is transmitted via a second beam path 202. The second signal is different to a radar signal. In the embodiment, the second signal is a laser signal.

The sensor arrangement 100 further comprises a deflector 400. The deflector 400 is arranged in the first beam path 201 in an angle of 45° to the first beam path 201. In another embodiment, the angle is chosen differently.

The deflector 400 is transparent for radar signals, i.e. the radar signals are within common tolerances not deflected but pass the deflector 400 as if the deflector 400 was not in the first beam path 201, albeit with a slight lateral displacement 201b. The first beam path 201 for the first signal is continued behind the deflector 400 as common beam path 201a.

The deflector 400 is reflective for the second signal. Therefore, the second beam path 202 is deflected by the deflector 400 to align the common beam path 201a. Both signals, the first signal and the second signal, are coaxial in transmission direction after the deflector 400 along the common beam path.

The sensor arrangement 100 comprises an evaluation electronics 500. The evaluation electronics 500 is configured to evaluate the first signals and the second signals. In another embodiment, the evaluation electronics 500 are located in the radar module 101 or the sensor module 300.

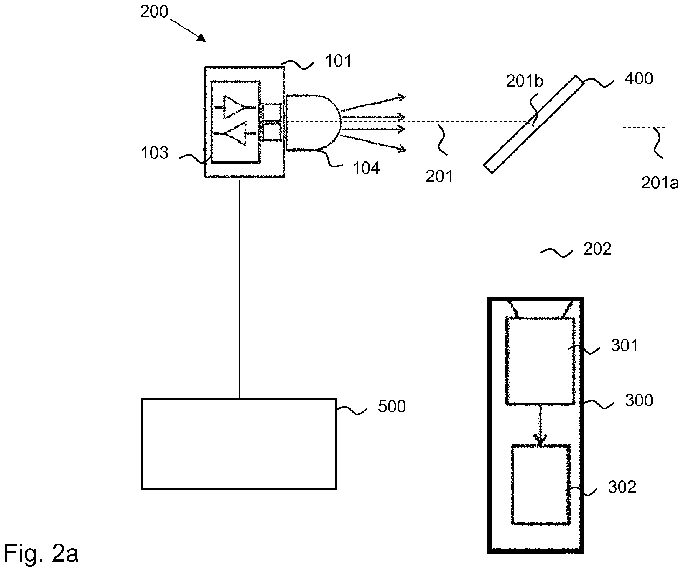

Fig. 2a shows a sensor arrangement 200 according to another embodiment. The sensor arrangement 200 comprises the radar module 101 and the deflector 400 as described with respect to Fig. 1.

According to the embodiment of Fig. 2a, the sensor module 300 comprises a camera module 301 and camera electronics 302. The camera module 301 is configured to receive electromagnetic signals via the common beam path 201a and the second beam path 202. The camera module 301 may be produce a spatially and/or spectrally resolved image in the visible (VIS), ultraviolet (UV), near infrared (NIR) or infrared (IR) spectral range. The camera module may contain filters and or other spectrally resolving instruments such as diffractive gratings and may be either a 1 dimensional or 2 dimensional array.

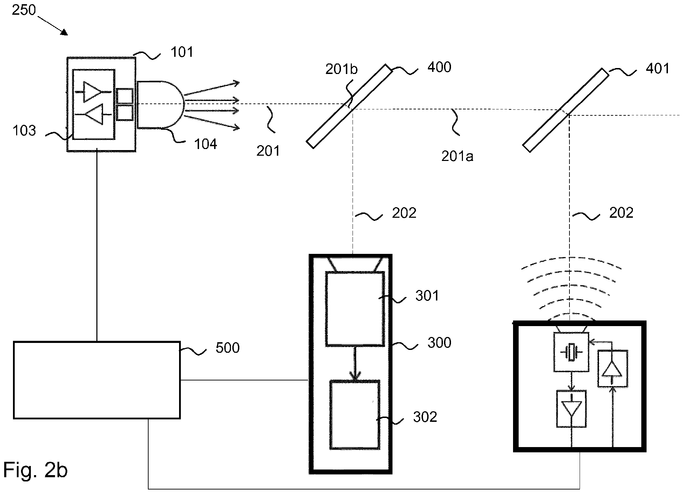

Fig. 2b shows a sensor arrangement 250 according to another embodiment. The sensor arrangement 250 comprises the radar module 101 and the deflector 400 coupling the beam of the sensor module 300. An additional ultrasonic module and a deflector 401 that is transparent to both radar and optical wavelengths, but reflective for acoustic signals are arranged in sequence to the sensor module 300.

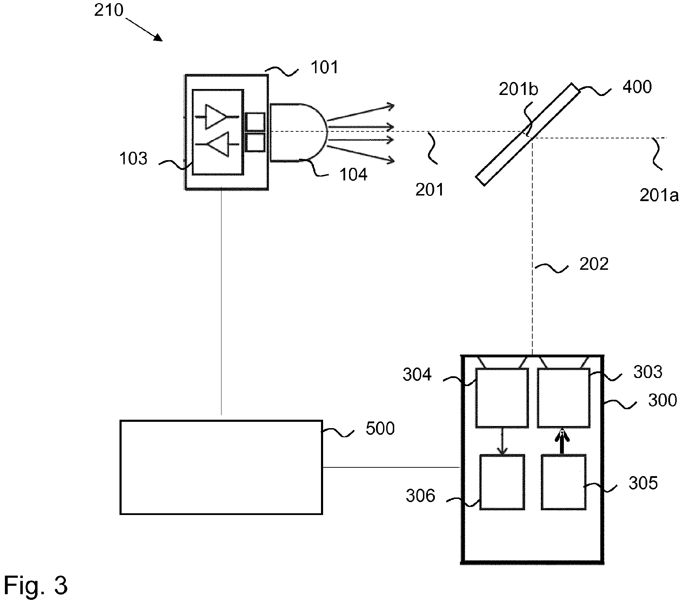

Fig. 3 shows a sensor arrangement 210 that comprises the radar module 101 and the deflector 400. The sensor module 300 comprises a transmitter 303 and a receiver 304. The transmitter 303 is coupled to a signal generator 305 and the receiver 304 is coupled to an evaluation unit 306. The sensor module 300 is configured to transmit a second signal in the optical wavelength range (in particular in the visible, ultraviolet, near infrared, or infrared), in particular a laser or LED (light emitting diode) signal at a single wavelength, a multitude of wavelengths, or a continuous spectrum produced by black body source via the second beam path 202.

The deflector 400 comprises a metal coating reflective to the wavelength transmitted by the transmitter 303. In the described embodiment, the deflective coating of the deflector 400 comprises a dielectric layer. In another embodiment, the deflector 400 comprises a semiconductive layer. In an embodiment, which does not form part of the invention, the deflector comprises a diffractive structure.

Both, the first signal and the second signal, are transmitted via the common beam path 201a that is in transmission direction behind the deflector 400 coaxially towards an object that should be measured. The object, in the figures not depicted, reflects both, the first and the second signal.

The first signal is reflected through the deflector 400 towards the radar module 101. The second signal is deflected via the deflector 400 towards the receiver 304 of the sensor module 300. The evaluation unit 306 evaluates the received optical signal that was received by the receiver 304. The evaluation electronics 500 evaluates the results of the radar module 101 and the sensor module 300 to provide a combined result. The evaluation may be a determination of distance or a spectral response, or a spatially and/or spectrally resolved distance and/or reflectance information.

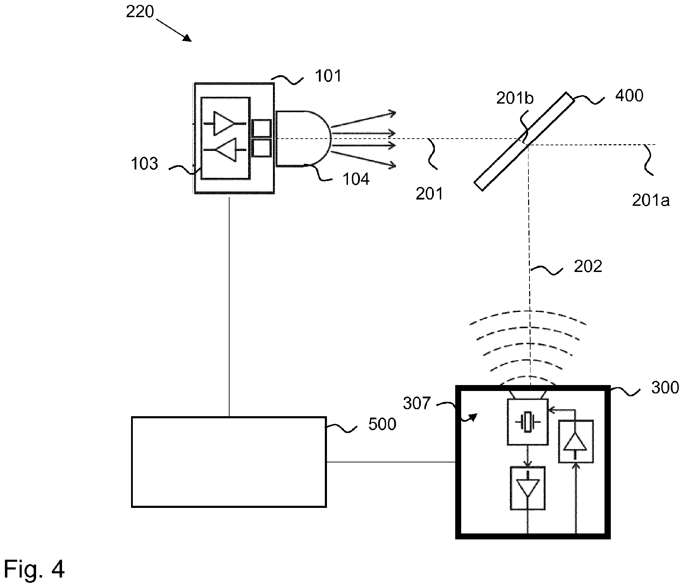

Fig. 4 depicts a sensor arrangement 220 according to another embodiment of the invention. The sensor arrangement 220 according to Fig. 4 comprises the radar module 101 and the deflector 400 as described above. The sensor module 300 is an acoustic sensor module and comprises an acoustic transceiver 307. The acoustic transceiver 307 is configured to transmit and receive acoustic signals, in particular ultrasonic signals. In this embodiment, the deflector 400 is reflective to acoustic signals but still transmissive to radar signals.

The acoustic transceiver 307 emits an acoustic ultrasonic signal as a second signal via the second beam path 202 that is deflected by the deflector 400 into the common signal path 201a. The acoustic signal that is reflected by the object to be measured returns via the common beam path 201a and is again deflected by the deflector 400 towards the acoustic transceiver 307 via the second beam path 202.

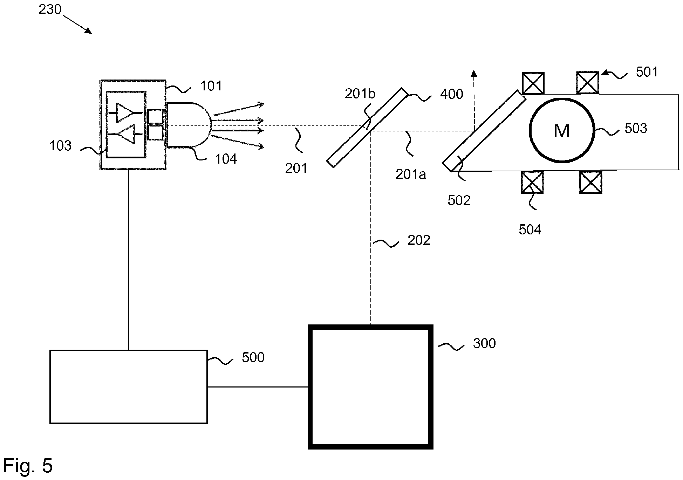

Fig. 5 shows a sensor arrangement 230 according to another embodiment of the invention. The sensor arrangement 230 comprises the radar module 101, the deflector 400 and the sensor module 300 as described with respective Fig. 1. In another embodiment, the sensor module 300 relates to one of the other sensor modules 300 described with respect to Fig. 2a, 3 or 4. Furthermore, the sensor arrangement 230 comprises a scanner module 501 that comprises a reflector 502 and a motor 503. The scanner module is mounted in bearings 504. The reflector 502 is reflective to the first signal and the second signal, i.e. reflective to radar signals and optical signals and/or acoustic signals. The motor 503 is configured to rotate the reflector 502. The radar module 101 and the sensor module 300 therefore both can detect objects in a range that is given by the rotation of the reflector 502, in particular an angle in excess of, but not limited to 270°. The rotation movement of the motor 503 and the resulting deflection of common beam 201a by the reflector 502 are preferably continuous. The change of deflection due to the rotation of the reflector 502 is not shown, and its plane is perpendicular to the plane of this drawing.

The scanner module is balanced for superior rotational properties.

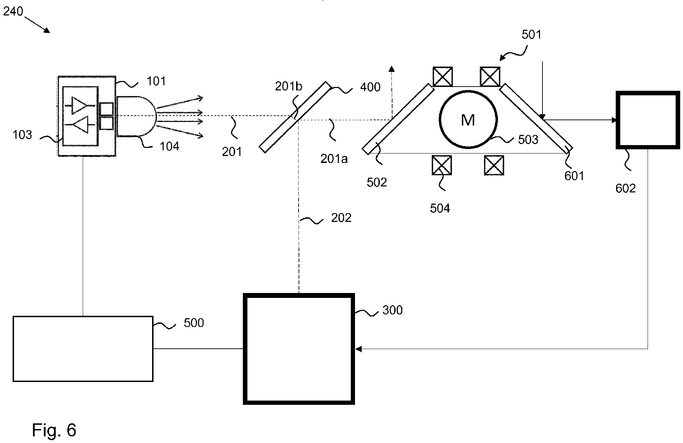

Fig. 6 shows a sensor arrangement 240 according to another embodiment of the invention. The sensor arrangement 240 comprises the radar module 101, the deflector 400, the sensor module 300 and the scanner module 501 as described with respect to Fig. 5. Furthermore, the sensor arrangement 240 comprises a receiving reflector 601. The receiving reflector 601 is configured to reflect the reflection of the second signal. The receiving reflector 601 is arranged in a distance to the common beam path 201a to reduce disturbances caused by scattering, in particular Rayleigh and/or Mie scattering. In the signal direction behind the receiving reflector 601, a receiving module 602 is allocated to receive the reflected signal of the second signal. In this embodiment, the first signal transmitted from the radar module is reflected and detected by the radar module 101 as described above.

The receiving module 602 is electronically coupled to the sensor module 300 to present the received signal data to the sensor module 300.

## Claims

1. Sensor arrangement (100, 200, 210, 220, 230, 240, 250) comprising
a radar module (101) configured to transmit a first signal, wherein the first signal is a radar signal, and to receive a reflection of the first signal;
a sensor module (300) configured to transmit and/or receive a second signal different to a radar signal; and
a deflector (400) that is transparent for radar signals and deflective for the second signal, wherein the deflector (400) is arranged in a first beam path (201) of the first signal in a predetermined angle; and
configured to deflect a second beam path (202) of the second signal into the first beam path (201) of the first signal,
wherein the deflector (400) comprises a semiconductor coating or a dielectric coating.

2. Sensor arrangement (100, 200, 210, 220, 230) according to claim 1, wherein the sensor module (300) is configured to transmit the second signal via the deflector (400) and to receive a reflection of the second signal via the deflector (400).

3. Sensor arrangement (240) according to claim 1, wherein the sensor module (300) is configured to transmit the second signal via the deflector (400) and to receive a reflection of the second signal via a receiving module (602).

4. Sensor arrangement (100, 200, 210, 220, 230, 240, 250) according to one of the preceding claims, wherein the sensor module (300) comprises an optical sensor or an ultrasonic sensor.

5. Sensor arrangement (100, 200, 210, 230, 240, 250) according to claim 4, wherein the optical sensor comprises a time of flight sensor, or a time of flight camera, or a camera or a hyperspectral camera, or a spectroscopy module.

6. Sensor arrangement (100, 200, 210, 220, 230, 240, 250) according to one of the preceding claims, wherein the sensor module (300) is arranged to transmit the second signal in an angle of 90 degree to the first beam path (201) of the first signal and wherein the deflector (400) is arranged in the first beam path (201) of the first signal in an angle of 45 degree.

7. Sensor arrangement (100, 200, 210, 220, 230, 240, 250) according to one of the preceding claims, wherein the deflector (400) comprises a substrate comprising glass or plastics.

8. Sensor arrangement (100, 200, 210, 220, 230, 240, 250) according to one of the preceding claims, wherein a thickness of the deflector (400) is dependent of a wavelength of the first signal, in particular 1/4 of the wavelength of the first signal.

9. Sensor arrangement (100, 200, 210, 220, 230, 240, 250) according to one of the preceding claims, wherein the sensor module (300) comprises an optical sensor and an ultrasonic sensor placed apart with their respective common beam paths (201a) coaxially aligned.

10. Sensor arrangement (230, 240) according to one of the preceding claims, comprising a scanner module (501) that is arranged in a common beam path (201a) comprising the first beam path (201) and the second beam path (202) and that is rotatable around the common axis of the common beam path (201a), comprising a reflector (502) configured to reflect the common beam path (201a).

11. Sensor arrangement (230, 240) according to claim 10, comprising a motor (503) mechanically coupled with the scanner module (501) and configured to rotate the scanner module (501) and preferably providing an angle feedback of the rotational position of the reflector (502).

12. Sensor arrangement (230, 240) according to claim 11, wherein a rotor of the motor (503) and a substrate of the reflector (502) of the scanner module (501) are mechanically combined and preferably providing an angle feedback of the rotational position of the reflector (502) and receiving reflector (601) assembly.

13. Sensor arrangement (230, 240) according to claim 10 or 11, wherein the scanner module (501) is balanced.

14. Sensor arrangement (240) according to claim 12 , comprising the receiving reflector (601) mechanically coupled with the reflector (502) and configured to receive a reflected signal of the transmitted second signal with the receiving module (602), wherein the receiving reflector (601) is arranged with a predetermined distance to the reflector (502) and thus to the common beam path (201a), and wherein the receiving module (602) is electrically coupled with the sensor module (300).

## Patentansprüche

1. Sensoranordnung (100, 200, 210, 220, 230, 240, 250), umfassend
ein Radarmodul (101), welches dazu ausgebildet ist, ein erstes Signal zu senden, wobei das erste Signal ein Radarsignal ist, und eine Reflektion des ersten Signals zu empfangen;
ein Sensormodul (300), welches dazu ausgebildet ist, ein zweites Signal auszusenden und/oder zu empfangen, das sich von einem Radarsignal unterscheidet; und
einen Deflektor (400), welcher für Radarsignale transparent und für das zweite Signal ablenkend ist, wobei der Deflektor (400) in einem ersten Strahlengang (201) des ersten Signals in einem vorgegebenen Winkel angeordnet ist; und
dazu ausgebildet ist, einen zweiten Strahlengang (202) des zweiten Signals in den ersten Strahlengang (201) des ersten Signals abzulenken,
wobei der Deflektor (400) eine Halbleiterbeschichtung oder eine dielektrische Beschichtung aufweist.

2. Sensoranordnung (100, 200, 210, 220, 230) nach Anspruch 1, wobei das Sensormodul (300) dazu ausgebildet ist, das zweite Signal über den Deflektor (400) zu senden und eine Reflektion des zweiten Signals über den Deflektor (400) zu empfangen.

3. Sensoranordnung (240) nach Anspruch 1, wobei das Sensormodul (300) dazu ausgebildet ist, das zweite Signal über den Deflektor (400) zu senden und eine Reflektion des zweiten Signals über ein Empfangsmodul (602) zu empfangen.

4. Sensoranordnung (100, 200, 210, 220, 230, 240, 250) nach einem der vorhergehenden Ansprüche, wobei das Sensormodul (300) einen optischen Sensor oder einen Ultraschallsensor umfasst.

5. Sensoranordnung (100, 200, 210, 230, 240, 250) nach Anspruch 4, wobei der optische Sensor einen Laufzeitsensor oder eine Laufzeitkamera oder eine Kamera oder eine Hyperspektralkamera oder ein Spektroskopiemodul umfasst.

6. Sensoranordnung (100, 200, 210, 220, 230, 240, 250) nach einem der vorhergehenden Ansprüche, wobei das Sensormodul (300) derart angeordnet ist, dass es das zweite Signal in einem Winkel von 90 Grad zu dem ersten Strahlengang (201) des ersten Signals überträgt, und wobei der Deflektor (400) in dem ersten Strahlengang (201) des ersten Signals in einem Winkel von 45 Grad angeordnet ist.

7. Sensoranordnung (100, 200, 210, 220, 230, 240, 250) nach einem der vorhergehenden Ansprüche, wobei der Deflektor (400) ein Glas oder Kunststoff aufweisendes Substrat umfasst.

8. Sensoranordnung (100, 200, 210, 220, 230, 240, 250) nach einem der vorhergehenden Ansprüche, wobei eine Dicke des Deflektors (400) von einer Wellenlänge des ersten Signals, insbesondere von 1/4 der Wellenlänge des ersten Signals, abhängig ist.

9. Sensoranordnung (100, 200, 210, 220, 230, 240, 250) nach einem der vorhergehenden Ansprüche, wobei das Sensormodul (300) einen optischen Sensor und einen Ultraschallsensor umfasst, die mit ihren jeweiligen gemeinsamen Strahlengängen (201a) zueinander koaxial ausgerichtet sind.

10. Sensoranordnung (230, 240) nach einem der vorhergehenden Ansprüche, mit einem Scannermodul (501), das in einem gemeinsamen Strahlengang (201a) umfassend den ersten Strahlengang (201) und den zweiten Strahlengang (202) angeordnet ist und das um die gemeinsame Achse des gemeinsamen Strahlengangs (201a) drehbar ist, mit einem Reflektor (502), der zur Reflektion des gemeinsamen Strahlengangs (201a) ausgebildet ist.

11. Sensoranordnung (230, 240) nach Anspruch 10, mit einem Motor (503), der mechanisch mit dem Scannermodul (501) gekoppelt und dazu ausgebildet ist, das Scannermodul (501) zu rotieren und vorzugsweise eine Rückmeldung der Rotationswinkelposition des Reflektors (502) zu liefern.

12. Sensoranordnung (230, 240) nach Anspruch 11, wobei ein Rotor des Motors (503) und ein Substrat des Reflektors (502) des Scannermoduls (501) mechanisch miteinander verbunden sind und vorzugsweise eine Rückmeldung der Rotationswinkelposition einer Baugruppe aus dem Reflektor (502) und einem Empfangsreflektor (601) liefern.

13. Sensoranordnung (230, 240) nach Anspruch 10 oder 11, wobei das Scannermodul (501) balanciert ist.

14. Sensoranordnung (240) nach Anspruch 12, umfassend den Empfangsreflektor (601), der mechanisch mit dem Reflektor (502) gekoppelt und ausgebildet ist, ein reflektiertes Signal des gesendeten zweiten Signals mit dem Empfangsmodul (602) zu empfangen, wobei der Empfangsreflektor (601) in einer vorbestimmten Distanz zu dem Reflektor (502) und damit zu dem gemeinsamen Strahlengang (201a) angeordnet ist, und wobei das Empfangsmodul (602) elektrisch mit dem Sensormodul verbunden ist.

## Revendications

1. Agencement de capteurs (100, 200, 210, 220, 230, 240, 250) comprenant
un module radar (101) conçu pour transmettre un premier signal, le premier signal étant un signal radar, et pour recevoir une réflexion du premier signal ;
un module de capteur (300) conçu pour transmettre et/ou recevoir un second signal différent du signal radar ; et
un déflecteur (400) transparent pour les signaux radar et déflecteur pour le second signal, le déflecteur (400) étant disposé dans un premier trajet de faisceau (201) du premier signal selon un angle prédéfini ; et
conçu pour dévier un second trajet de faisceau (202) du second signal dans le premier trajet de faisceau (201) du premier signal,
le déflecteur (400) comprenant un revêtement semi-conducteur ou un revêtement diélectrique.

2. Agencement de capteurs (100, 200, 210, 220, 230) selon la revendication 1, le module de capteur (300) étant conçu pour transmettre le second signal via le déflecteur (400) et pour recevoir une réflexion du second signal via le déflecteur (400).

3. Agencement de capteurs (240) selon la revendication 1, le module de capteur (300) étant conçu pour transmettre le second signal via le déflecteur (400) et pour recevoir une réflexion du second signal via le module de réception (602).

4. Agencement de capteurs (100, 200, 210, 220, 230, 240, 250) selon l'une des revendications précédentes, le module de capteur (300) comprend un capteur optique ou un capteur à ultrasons.

5. Agencement de capteurs (100, 200, 210, 230, 240, 250) selon la revendication 4, le capteur optique comprenant un capteur de temps de vol, ou une caméra de temps de vol, ou une caméra ou une caméra hyperspectrale, ou un module de spectroscopie.

6. Agencement de capteurs (100, 200, 210, 220, 230, 240, 250) selon l'une des revendications précédentes, le module de capteurs (300) étant conçu pour transmettre le second signal dans un angle de 90 degrés par rapport au premier trajet de faisceau (201) du premier signal et le déflecteur (400) étant conçu dans le premier trajet de faisceau (201) du premier signal dans un angle de 45 degrés.

7. Agencement de capteurs (100, 200, 210, 220, 230, 240, 250) selon l'une des revendications précédentes, le déflecteur (400) comprenant un substrat comprenant du verre ou du plastique.

8. Agencement de capteurs (100, 200, 210, 220, 230, 240, 250) selon l'une des revendications précédentes, une épaisseur du déflecteur (400) dépendant d'une longueur d'onde du premier signal, en particulier de 1/4 de la longueur d'onde du premier signal.

9. Agencement de capteurs (100, 200, 210, 220, 230, 240, 250) selon l'une des revendications précédentes, le module de capteur (300) comprenant un capteur optique et un capteur à ultrasons placés à distance avec leurs trajets de faisceau communs respectifs (201a) alignés coaxialement.

10. Agencement de capteurs (230, 240) selon l'une des revendications précédentes, comprenant un module de balayage (501) qui est disposé dans un trajet de faisceau commun (201a) comprenant le premier trajet de faisceau (201) et le second trajet de faisceau (202) et qui peut être mis en rotation autour de l'axe commun du trajet de faisceau commun (201a), comprenant un réflecteur (502) conçu pour réfléchir le trajet de faisceau commun (201a).

11. Agencement de capteurs (230, 240) selon la revendication 10, comprenant un moteur (503) accouplé mécaniquement au module de balayage (501) et conçu pour mettre en rotation le module de balayage (501) et fournissant de préférence un retour d'angle de la position de rotation du réflecteur (502).

12. Agencement de capteurs (230, 240) selon la revendication 11, un rotor du moteur (503) et un substrat du réflecteur (502) du module de balayage (501) étant combinés mécaniquement et fournissant de préférence un retour d'angle de la position de rotation de l'ensemble réflecteur (502) et réflecteur de réception (601).

13. Agencement de capteurs (230, 240) selon la revendication 10 ou 11, le module de balayage (501) étant équilibré.

14. Agencement de capteurs (240) selon la revendication 12, comprenant le réflecteur de réception (601) accouplé mécaniquement au réflecteur (502) et conçu pour recevoir un signal réfléchi du second signal transmis avec le module de réception (602), le réflecteur de réception (601) étant disposé à une distance prédéfinie du réflecteur (502) et donc du trajet de faisceau commun (201a), et le module de réception (602) étant couplé électriquement au module de capteur (300).
